(19) Europäisches Patentamt
European Patent Office
Office européen des brevets

(11) **EP 1 882 915 A1**

(12) **EUROPÄISCHE PATENTANMELDUNG**

(43) Veröffentlichungstag:
**30.01.2008 Patentblatt 2008/05**

(51) Int Cl.:
***G01H 1/00*** *(2006.01)*

(21) Anmeldenummer: 06015495.2

(22) Anmeldetag: **25.07.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **SIEMENS AKTIENGESELLSCHAFT 80333 München (DE)**

(72) Erfinder: **Lüneburg, Bernd, Dr. 45481 Mülheim an der Ruhr (DE)**

(54) **Verfahren zum Testen von Rotoren**

(57)  Die Erfindung betrifft ein Verfahren zum Testen von Rotoren (1), wobei ein zu testender Rotor (1) mit einem Aktivierungsmotor (5) drehmomentübertragend gekoppelt, in Drehung versetzt und Schwingungen des Rotors (1) gemessen werden, wobei der Aktivierungsmotor (5) derart betrieben wird, dass Torsionsanregungen im Rotor (1) erzeugt werden.

FIG 1

EP 1 882 915 A1

**Beschreibung**

Die Erfindung betrifft ein Verfahren zum Testen von Rotoren, wobei ein zu testender Rotor mit einem Aktivierungsmotor drehmomentübertragend gekoppelt, in Drehung versetzt wird und Schwingungen des Rotors gemessen werden. Die Erfindung betrifft des Weiteren einen Aktivierungsmotor zur Verwendung in einer Messanordnung zur Messung von Schwingungen eines drehbar gelagerten Rotors.

Eine Dampfturbine als Ausführungsform einer Strömungsmaschine wird üblicherweise mit 50 Hz betrieben, wenn diese Dampfturbine für das europäische elektrische Energieversorgungsnetz vorgesehen ist, oder mit 60 Hz, wenn diese Dampfturbine für das US-amerikanische elektrische Energieversorgungsnetz vorgesehen ist. Wenn solche eine Dampfturbine zudem an einen vierpoligen Generator angekoppelt wird, liegen die im Betrieb auftretenden Drehzahlen bei 25 Hz in Bezug auf das europäische elektrische Energieversorgungsnetz oder bei 30 Hz in Bezug auf das US-amerikanische elektrische Energieversorgungsnetz.

Im Betrieb können Rotoren in Strömungsmaschinen Schwingungsanregungen erfahren, die zu Schwingungen führen können, die schließlich zu einem Versagen des Rotors oder der Schaufeln und damit der Strömungsmaschine führt. Unter der Sammelbezeichnung Strömungsmaschine werden Wasserturbinen, Dampf- und Gasturbinen, Windräder, Kreiselpumpen und Kreiselverdichter sowie Propeller zusammengefasst. Allen diesen Maschinen ist gemeinsam das sie dem Zweck dienen, einem Fluid Energie zu entziehen, um damit eine andere Maschine anzutreiben oder umgekehrt einem Fluid Energie zuzuführen, um dessen Druck zu erhöhen.

Rotoren von Dampfturbinen, insbesondere Rotoren mit Schaufeln oder Schaufelkränzen können im Betrieb bei bestimmten Drehzahlen zu Torsionsschwingungen angeregt werden. Die Schwingungen sind unerwünscht und treten häufig bei so genannten torsionskritischen Drehzahlen auf. Oft bilden die Schaufeln oder Schaufelkränze erst durch im Betrieb auftretende Zentrifugalkräfte einen Verbund. Die experimentelle Bestimmung der torsionskritischen Drehzahlen ist während der Produktentwicklung oder während der Fertigung schwierig. Das bedeutet, dass die Auslegung solcher Rotoren in Bezug auf torsionskritische Eigenfrequenzen mit großen Unsicherheiten erfolgt. Wenn die Dampfturbine bestimmungsgemäß beispielsweise in einem Generator und/oder einer Gasturbine gekoppelt ist und somit einen Gesamtstrang bildet, kann eine Messung der Schwingungen erfolgen.

Bevor ein Rotor in einer Strömungsmaschine bestimmungsgemäß eingebaut und anschließend in Betrieb genommen wird, sind i. d. R. Testläufe des Rotors in einem so genannten Wuchtbunker erforderlich, um zu testen, ob der Rotor den gewünschten Qualitätsanforderungen entspricht. Dazu wird der Rotor in dem Wuchtbunker drehgelagert angeordnet und über einen Aktivierungsmotor in Drehung versetzt. Mit Messsensoren werden die Schwingungen des Rotors ermittelt und die dabei aufgenommenen Messdaten gespeichert und ausgewertet. Erst wenn der Rotor bestimmten Drehzahlen und Beschleunigungskräften Stand hält, kann dieser zur Auslieferung freigegeben werden.

Bei komplexen rotationssymmetrischen Systemen tauchen naturgemäß torsionskritische Eigenfrequenzen auf. Sofern ein Rotor mit einer Anregungsfrequenz betrieben wird, die nahe bei der Eigenfrequenz liegt, kann es zu Schädigungen des Rotors, der Schaufeln bzw. der Dampfturbine kommen.

Oft stellt sich erst während des bestimmungsgemäßen Betriebes heraus, dass ein Rotorsystem Schwingungen bei torsionskritischen Drehzahlen aufweist, die zu einer Schädigung führen könnten.

Wünschenswert wäre es, wenn ein Verfahren zum Testen von Rotoren zur Verfügung stünde, mit dem torsionskritische Drehzahlen simuliert werden können.

An dieser Stelle setzt die Erfindung an, dessen Aufgabe es ist, ein Verfahren zum Testen von Rotoren anzugeben, mit dem es möglich ist, Schwingungen eines Rotors zu messen, die im Betrieb auftreten.

Eine weitere Aufgabe der Erfindung ist es einen Aktivierungsmotor anzugeben, der in einer Messanordnung verwendet werden kann, mit der das Schwingungsverhalten eines Rotors gemessen werden kann.

Gelöst wird diese Aufgabe durch ein Verfahren zum Testen von Rotoren, wobei ein zu testender Rotor mit einem Aktivierungsmotor drehmomentübertragend gekoppelt, in Drehung versetzt und Schwingungen des Rotors gemessen werden, wobei der Aktivierungsmotor derart betrieben wird, dass Torsionsanregungen im Rotor erzeugt werden.

Die Erfindung geht von dem Aspekt aus, dass Schwingungen des Rotors bei torsionskritischen Drehzahlen ermittelt werden können, wenn der Rotor über einen Aktivierungsmotor derart betrieben wird, dass Torsionsanregungen erzeugt werden. Dafür wird der Rotor inklusive eines Aktivierungsmotors mit zeitlich konstanten Drehzahlen in Drehung versetzt und die Schwingung des Rotors über Messaufnehmer gemessen.

Vorteilhafte Weiterbildungen sind in den Unteransprüchen enthalten.

Die auf den Aktivierungsmotor hin gerichtete Aufgabe wird gelöst durch einen Aktivierungsmotor zur Verwendung in einer Messanordnung zur Messung eines drehbar gelagerten Rotors, wobei der Aktivierungsmotor derart ausgebildet ist, dass das vom Aktivierungsmotor übertragbare Drehmoment einen zeitlich konstanten Anteil und einen zeitlich veränderlichen Anteil aufweist.

Vorteilhaft für das Verfahren ist es, wenn die Torsionsanregungen dadurch erzeugt werden, dass das vom Aktivierungsmotor auf den Rotor übertragene Drehmoment neben einem zeitlich konstanten Anteil einen zeitlich veränderlichen Anteil hat. Dies hat den Vorteil, dass Torsionsanregungen simuliert werden können, die im bestimmungsgemäßen Betrieb auftauchen bzw. erwartet werden können.

Vorteilhaft ist es, wenn die zeitlich veränderlichen Anteile durch eine harmonische Funktion beschreiben werden können. Dies hat unter anderem den Vorteil, dass harmonische Funktionen erfahrungsgemäß zu schädigenden Anregungsfrequenzen führen, die im Betrieb auftreten können.

Das Drehmoment, das auf den Rotor vom Aktivierungsmotor übertragen wird, wird durch folgende Gleichung beschrieben:

$$M(t) = M_0 + M_A \times \sin(\omega(t) \times t).$$

Als vorteilhaft erweist es sich, wenn bei einer festen Rotordrehzahl die Frequenz $\omega(t)$ von einem Startwert zu einem Zielwert verändert wird, wobei die Amplitude $M_A$ konstant bleibt. Ebenso ist es vorteilhaft, wenn die Amplitude verändert wird und die Frequenz $\omega(t)$ erneut von einem Startwert zu einem Zielwert verändert wird. Ebenso ist es vorteilhaft, wenn die Änderungsgeschwindigkeit der Frequenz vom Startwert zum Zielwert verändert werden kann.

Ausführungsbeispiele der Erfindung werden nachfolgend anhand der Zeichnungen beschrieben.

Im Einzelnen zeigt die Zeichnung in:

Figur 1     eine schematisierte Darstellung einer Messanordnung von integriertem Antriebs- und Aktivierungsmotor,

Figur 2     eine schematisierte Darstellung einer Messanordnung mit einem separaten Antriebs- und Aktivierungsmotor,

Figur 3     Darstellung von drei harmonischen Anregungsfunktionen des Aktivierungsmotors.

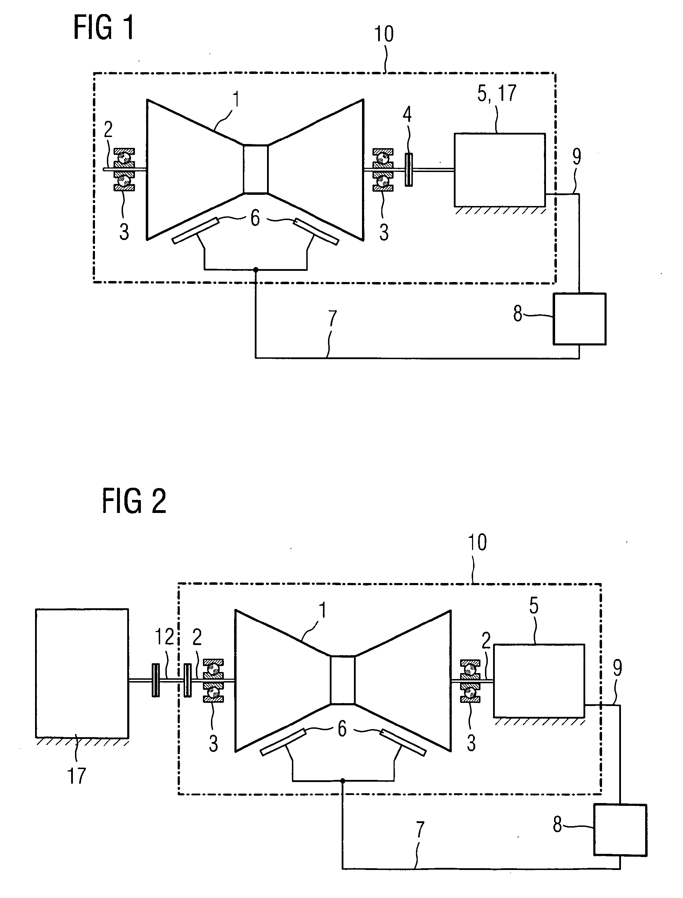

In der Figur 1 und in Figur 2 sind in schematischer Weise ein Rotor 1 einer Strömungsmaschine dargestellt. Die Strömungsmaschine kann eine Hochdruck-, Mittel- oder Niederdruck-Dampfturbine oder eine Gasturbine sein. Der Rotor 1 ist um eine Rotationsachse 2 drehbar gelagert und auf Lagern 3 abgelegt. Der Rotor 1 kann mit oder ohne Laufschaufeln auf den Lagern 3 abgesetzt werden.

Über eine Kupplung 4 wird der Rotor 1 drehmomentübertragend mit einem Aktivierungsmotor 5 gekoppelt. Der Aktivierungsmotor 5 kann als elektrischer Servomotor ausgebildet sein.

In der Ausführung Figur 1 ist der Aktivierungsmotor 5 zur Erzeugung der Torsionsanregung und der Antriebsmotor 17 zur Drehung des Rotors 1 integriert.

Alternativ kann der Antriebsmotor 17 vom Aktivierungsmotor 5 separiert werden, so dass die Drehung des Rotors 1 und des Aktivierungsmotors 5 durch den als Drehmotor ausgebildeten Antriebsmotor 17 erfolgt. Hierzu wird der Drehmotor drehmomentstarr aber torsionsweich entkoppelt mit dem Rotor 1 verbunden. Figur 2 zeigt den schematischen Aufbau.

Schwingungen des Rotors und der Schaufeln werden über Messaufnehmer 6 erfasst und über Datenleitungen 7 an eine Steuer-und Auswerteeinheit 8 weitergeleitet.

Die Anregungsfrequenz und die Drehzahl des Aktivierungsmotors 5 kann über die Steuer- und Auswerteeinheit 8 und über die Steuerleitung 9 getrennt gesteuert werden. Die Kupplung 4, der Rotor 1, die Lager 3 und der Aktivierungsmotor 5 werden üblicherweise in einem Wuchtbunker 10 angeordnet. Der Innenraum des Wuchtbunkers 10 wird mit Vakuumpumpen derart ausgepumpt, dass vakuumähnliche Bedingungen im Innenraum des Wuchtbunkers 10 herrschen.

Im Testverfahren wird der zu testende Rotor 1 mit dem Aktivierungsmotor 5 drehmomentübertragend gekoppelt und durch den Aktivierungsmotor 5 oder alternativ durch den Antriebsmotor 11 in Drehung versetzt. Die Schwingungen des Rotors 1 bzw. der am Rotor 1 angeordneten Schaufeln werden über die Schwingungsmesser 6 gemessen. Der Aktivierungsmotor 5 wird dabei derart betrieben, dass Torsionsanregungen im Rotor 1 erzeugt werden. Die Torsionsanregungen werden dadurch erzeugt, dass das vom Aktivierungsmotor 5 auf den Rotor 1 übertragende Drehmoment neben einem zeitlich konstanten Anteil einen zeitlich veränderlichen Anteil hat.

Der zeitlich veränderliche Anteil wird hierbei als eine harmonische Funktion gewählt. Neben einer Frequenz weist der zeitlich veränderliche Anteil eine Amplitude auf. Mit Hilfe des Aktivierungsmotors 5 ist es möglich, Torsionsanregungen in der entsprechenden Höhe und in der geforderten Dynamik zu erzeugen, so dass der Rotor 1 und die Schaufeln messbare Schwingungen durchführen.

Der Aktivierungsmotor 5 überträgt ein Drehmoment auf den Rotor 1 gemäß folgender Gleichung:

$$M(t) = M_0 + M_A \times \sin(\omega(t) \times t).$$

Besonders vorteilhaft ist es, wenn die Frequenz w(t) bei einer festen Rotordrehzahl von einem Start-Wert zu einem Ziel-Wert verändert wird, wobei die Amplitude $M_A$ konstant bleibt.

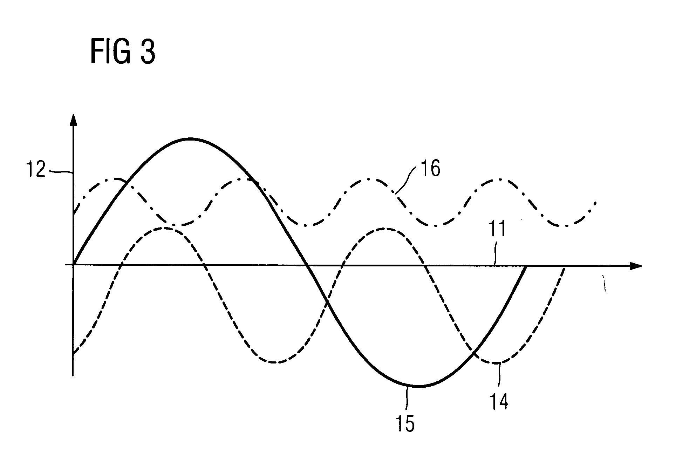

In der Figur 3 sind beispielhaft drei Verläufe der Drehzahl des Aktivierungsmotors über der Zeit dargestellt. Auf der X-Achse 11 ist die Zeit aufgetragen und auf der Y-Achse 12 ist der veränderliche Teil des auf den Rotor 1 übertragenden Drehmomentes dargestellt. Im störfreien Betrieb ist kein zeitlich veränderlicher Anteil des Drehmomentes auszumachen. Erst im Betrieb treten üblicherweise harmonische Schwingungen als zeitlich veränderlicher Anteil auf. Solch harmonische Schwingungen 14, 15, 16 sind meistens Sinus- oder Kosinusfunktionen. Vorteilhaft ist es ebenso, wenn bei dem zeitlich veränderlichen Anteil die Amplitude $M_A$ verändert wird und die Frequenz $\omega(t)$ erneut von einem Start-Wert zu einem Ziel-Wert verändert wird.

Der Aktivierungsmotor 5 ist derart ausgebildet, dass das vom Aktivierungsmotor 5 übertragbare Drehmoment einen zeitlich konstanten Anteil und einen zeitlich veränderlichen Anteil aufweist. Der zeitlich veränderliche Anteil kann eine harmonische Funktion sein. Durch das erfindungsgemäße Verfahren ist es möglich die Amplituden und Frequenzen für große und kleine Rotoren 1 einfach in einem weiten Bereich zu steuern. Zur Qualitätssicherung wird in der Steuer- und Auswerteeinheit 8 die gemessenen Schwingungen und Drehzahlen protokolliert und ausgewertet.

Bezugszeichenliste

| 1 | Rotor |
| 2 | Rotationsachse |
| 3 | Lager |
| 4 | Kupplung |
| 5 | Aktivierungsmotor |
| 6 | Messaufnehmer |
| 7 | Datenleitung |
| 8 | Steuer- und Auswerteeinheit |
| 9 | Steuerleitung |
| 10 | Wuchtbunker |
| 11 | X-Achse |
| 12 | Y-Achse |
| 14,15,16 | harmonische Schwingungen |
| 17 | Antriebsmotor |

**Patentansprüche**

1.   Verfahren zum Testen von Rotoren (1),
     wobei ein zu testender Rotor (1) mit einem Aktivierungsmotor (5) drehmomentübertragend gekoppelt, in Drehung versetzt und Schwingungen des Rotors (1) gemessen werden,
     **dadurch gekennzeichnet, dass**
     der Aktivierungsmotor (5) derart betrieben wird,
     dass Torsionsanregungen im Rotor (1) erzeugt werden.

2.   Verfahren nach Anspruch 1,
     wobei die Torsionsanregungen **dadurch** erzeugt werden,
     dass das vom Aktivierungsmotor (5) auf den Rotor (1) übertragene Drehmoment neben einem zeitlich konstanten Anteil einen zeitlich veränderlichen Anteil hat.

3.   Verfahren nach Anspruch 1 oder 2,
     wobei der zeitlich konstante Anteil des übertragenen Drehmoments mit einem Antriebsmotor (17) und der zeitlich veränderliche Anteil mit einem Aktivierungsmotor (5) erreicht wird.

4.   Verfahren nach Anspruch 2 oder 3,
     wobei der zeitlich veränderliche Anteil als harmonische Funktion gewählt wird.

5.   Verfahren nach Anspruch 2 oder 3,
     wobei der zeitlich veränderliche Anteil eine Amplitude zeigt.

**6.** Verfahren nach Anspruch 2 oder 3,
wobei der Aktivierungsmotor (5) das Drehmoment auf den Rotor (1) gemäß folgender Gleichung überträgt:

$$M(t) = M_0 + M_A \times \sin(\omega(t) \times t),$$

mit

$M_0$ = zeitlich konstantes Drehmoment,
$M_A$ = Amplitude des zeitveränderlichen Anteils,
$\omega(t)$ = zeitlich veränderliche Frequenz.

**7.** Verfahren nach Anspruch 6,
wobei bei einer festen Rotordrehzahl die Frequenz $\omega(t)$ von einem Start-Wert zu einem Ziel-Wert verändert wird,
wobei die Amplitude $M_A$ konstant bleibt.

**8.** Verfahren nach Anspruch 7,
wobei die Amplitude $M_A$ verändert wird und
die Frequenz $\omega(t)$ erneut von einem Start-Wert zu einem Ziel-Wert verändert wird.

**9.** Verfahren nach einem der vorhergehenden Ansprüche,
wobei Schaufeln an dem Rotor (1) angeordnet und Schwingungen der Schaufeln gemessen werden.

**10.** Aktivierungsmotor (5) zur Verwendung in einer Messanordnung zur Messung von Schwingungen eines drehbar gelagerten Rotors (1),
wobei der Aktivierungsmotor (5) derart ausgebildet ist, dass
das vom Aktivierungsmotor (5) übertragbare Drehmoment einen zeitlich konstanten Anteil und einen zeitlich veränderlichen Anteil aufweist.

**11.** Aktivierungsmotor (5) nach Anspruch 10,
wobei der zeitlich veränderliche Anteil eine harmonische Funktion ist.

**12.** Aktivierungsmotor (5) nach Anspruch 10,
wobei das Drehmoment gemäß folgender Gleichung übertragbar ist:

$$M(t) = M_0 + M_A \times \sin(\omega(t) \times t).$$

**13.** Aktivierungsmotor (5) nach Anspruch 12,
wobei bei einer festen Rotordrehzahl die Frequenz $(w(t)$ von einem Start-Wert zu einem Ziel-Wert veränderbar ist.

**14.** Aktivierungsmotor (5) nach Anspruch 12,
wobei die Amplitude $M_A$ veränderbar ist.

FIG 1

FIG 2

## FIG 3

**Europäisches Patentamt**

## EUROPÄISCHER RECHERCHENBERICHT

Nummer der Anmeldung

EP 06 01 5495

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BAI MINGSIAN R ET AL: "Development of an on-line diagnosis system for rotor vibration via model-based intelligent inference" JOURNAL OF THE ACOUSTICAL SOCIETY OF AMERICA, AIP / ACOUSTICAL SOCIETY OF AMERICA, MELVILLE, NY, US, Bd. 107, Nr. 1, Januar 2000 (2000-01), Seiten 315-323, XP012001432 ISSN: 0001-4966 * das ganze Dokument * ----- | 1-14 | INV. G01H1/00 |
| A | US 6 065 344 A (NOLAN JOHN FRANCIS [US] ET AL) 23. Mai 2000 (2000-05-23) * Abbildung 1 * ----- | 1-14 | |
| A | DE 103 44 802 A1 (FORD GLOBAL TECHNOLOGIES LLC [US]) 14. April 2005 (2005-04-14) * Abbildung 2 * ----- | 1-14 | |

RECHERCHIERTE SACHGEBIETE (IPC)

G01H

Der vorliegende Recherchenbericht wurde für alle Patentansprüche erstellt

| Recherchenort | Abschlußdatum der Recherche | Prüfer |
|---|---|---|
| Den Haag | 29. Mai 2007 | Modesto, Carlos |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 01 5495

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-05-2007

| Im Recherchenbericht angeführtes Patentdokument | Datum der Veröffentlichung | Mitglied(er) der Patentfamilie | Datum der Veröffentlichung |
|---|---|---|---|
| US 6065344 A | 23-05-2000 | KEINE | |
| DE 10344802 A1 | 14-04-2005 | KEINE | |

EPO FORM P0461

Für nähere Einzelheiten zu diesem Anhang : siehe Amtsblatt des Europäischen Patentamts, Nr.12/82